Europäisches Patentamt

(19) **European Patent Office**

Office européen des brevets

(11) Publication number: **0 028 914**
**B1**

(12) # EUROPEAN PATENT SPECIFICATION

(45) Date of publication of patent specification: **23.11.83**

(51) Int. Cl.³: **C 08 F 279/02,**
**C 08 F 255/02**

(21) Application number: **80303936.1**

(22) Date of filing: **05.11.80**

(54) **Manufacture of rubber-modified co-polymers in an extruder-type reactor.**

(30) Priority: **07.11.79 US 92260**

(43) Date of publication of application:
**20.05.81 Bulletin 81/20**

(45) Publication of the grant of the patent:
**23.11.83 Bulletin 83/47**

(84) Designated Contracting States:
**BE CH DE FR GB IT LI LU NL SE**

(56) References cited:
**FR - A - 2 278 709**
**US - A - 3 513 145**

(73) Proprietor: **THE STANDARD OIL COMPANY**
**Midland Building**
**Cleveland, Ohio 44115 (US)**

(72) Inventor: **Lee, Robert Wen**
**3203 Ashton Park Drive**
**Houston, Texas 77082 (US)**
Inventor: **Miloscia, William Jack**
**3250 Aberdeen Road**
**Shaker Heights Ohio 44120 (US)**

(74) Representative: **Smith, Sydney et al,**
**Elkington and Fife High Holborn House 52/54**
**High Holborn**
**London WC1V 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Manufacture of rubber-modified co-polymers in an extruder-type reactor

This invention relates to the manufacture of rubber-modified co-polymers in an extruder-type reactor.

Rubber-modified resin have been produced by batch type reactions, typically those known as emulsion reactions. For example, U.S. Patent No. 3,821,348 discloses a resin produced by polymerizing a major portion of a mono-unsaturated nitrile such as acrylonitrile, a minor portion of another monovinyl monomer component and a preformed diene rubber. This batch reaction typically takes 4—5 hours to achieve a 90% conversion of monomer.

The polymerization of ethylenically-unsaturated monomers by themselves, in a screw extruder, is taught in U.S. Patent No. 3,536,680. However, the feeding of the rubbery polymer in addition to the monomers disclosed in this reference is novel. Generally, screw extruders operate at a much higher temperature than emulsion processes. Such high temperatures normally will cause undesirable properties in rubber-modified resins. Further, one would generally expect undesirable side reactions, for instance cross-linking, to occur because of these temperatures. Finally, since the rates of reaction for polymerizing a monomer is different from the rates of reaction for grafting the rubbery polymer onto the polymers being formed, one would usually expect the much shorter residence time in a screw extruder to adversely affect the properties of any resins formed.

An example of a method to avoid these problems commonly caused by high temperature is found in U.S. Patent No. 3,133,135. This reference discloses very limited polymerization between an organic polymer such as butadiene-acrylonitrile rubber and acrylonitrile monomer using a spinaret. It is required that temperatures of this reaction be from about —80°C to about 90°C. As noted in this reference, the final resin is formed immediately during the shaping of an article. Further, the amount of conversion of monomer is extremely low.

Contrary to these teachings, it has been found that a resin containing a rubbery polymer that has high impact resistance may be formed in a screw extruder at high temperatures.

The present invention provides a process for the production of a resin having a notched Izod of greater than 0.26 J/cm comprising the reaction product of a rubbery polymer selected from butadiene/acrylonitrile, butadiene/styrene, polybutadiene and ethylene-propylene diene rubber with one or more ethylenically-unsaturated monomers selected from acrylonitrile, acrylic acid and methyl acrylate characterised in that it comprises:

(a) introducing a mixture of the rubbery polymer and one or more of said ethylenically-unsaturated monomers into a feed section of a screw extruder;

(b) polymerizing the monomer(s) with the rubbery polymer in one or more additional reaction sections of the extruder, each section containing means to remove the heat of the reaction to control the temperature therein; and

(c) extruding the co-polymer formed at its melt temperature through a die head to produce the resin.

Both the monomers and the rubbery polymers are those well known in the art. As indicated above, the suitable ethylenically-unsaturated monomers which can be polymerized with each other are acrylonitrile, acrylic acid and methyl acrylate. Acrylonitrile and methyl acrylate represent preferred monomers.

As indicated above, the rubbery polymers are butadiene/acrylonitrile, butadiene/styrene, polybutadiene and ethylenepropylene diene rubber. Of these polymers butadiene/acrylonitrile is preferred.

In producing the resins from these components, other items are added, such as initiators, chain transfer agents, and additives, such as dyes and stabilizers. The use and amount of such items, along with the amount of monomers and rubbery polymers are all known in the art and not the subject of the present invention.

Screw extruders are also well known in the art, as described in U.S. Patent No. 3,799,234. Specifically, the extruder of the present invention should contain a feed section, followed by two or more reaction sections and a final extrusion port.

The feed section is simply a means of obtaining all of the reaction components in a well dispersed state prior to the screw increasing the pressure through the extruder. It is important that the monomers be in a liquid state. This may be accomplished by regulating the temperature of the feed section and/or the pressure of the components being fed. The rubbery polymer may be added to the feed section by dispersing the polymer in one of the monomers, water or solvent. It is preferred that the rubbery polymer be dispersed in one of the monomers to be reacted to minimize additional processing steps. For example, even if water is utilized, this water must be removed with an additional dewatering section of the extruder.

The extruder will operate at pressures of from 0.7 kg/cm² gauge (10 psig) or greater and temperatures from ambient up to the melt temperature of the final resin produced. This melt temperature can be in the neighbourhood of 176°C (350°F) or greater.

After the feed section, there should be at least one or more reactor sections, preferably two or more. Each reactor section has means for removing the heat of reaction and thus controlling the temperature of this section independent of the other section. In this manner, a temperature gradient can be developed from the feed section up to the final temperature necessary for melt extrusion. This will allow control of the polymerization of the monomers. Such means are known in the art, and may consist, for example of cooling water flowing around the reaction section.

There may also be additional sections for dewatering or de-gassing the resin prior to final extrusion. Thus if complete conversion of the monomer is not achieved, the residual monomers can be removed in this section prior to forming the resin.

Finally, the last section of the extruder contains an extruder die for forming the resin into the final desired shape.

The following Example illustrates the invention:

Example

An acrylonitrile-rubber resin was prepared in a Werner-Pfleiderer twin-screw extruder having a feed section, five independently controlled temperature sections, and a die head. The screw was operated at 75 rpm 27 grams/minute of a liquid solution of 75 parts acrylonitrile/25 parts methyl acrylate/one part mercaptan chain transfer agent was fed to the feed section of the screw extruder. Dissolved in this stream was 2.45 grams/minute of an acrylonitrile/butadiene rubber polymer. To the feed section was added 0.40 grams/minute of polymerization initiator. The feed section was at ambient temperature and 10.5 kg/cm² gauge (150 psig). Cooling water was used to control the temperature of the five additional reactor sections. The temperatures were as follows:

| Section 1 | 230°F (110°C) |
| Section 2 | 250°F (121°C) |
| Section 3 | 300°F (149°C) |
| Section 4 | 320°F (160°C) |
| Section 5 | 350°F (176°C) |
| Die head | 350°F (176°C) |

20.8 grams/minute of resin was produced with a total monomer conversion of 77%. The estimated residence time in the extruder was 4 minutes. The resin was then tested for notched Izod and found to have a value of 0.88 J/cm (1.65 ft lbs/inch). This is compared to resins made in the extruder not containing the rubber polymer having a notched Izod of approximately 0.058 J/cm (0.11 ft lbs/inch). A polymer is considered to have good impact resistance if the notched Izod has a value about 0.26 J/cm (0.5 ft lbs/inch). Thus the present invention, despite the high temperatures, short resident time and different reaction rates of monomer-monomer versus monomer-polymer, has achieved an unexpectedly high value for impact resistance.

**Claims**

1. A process for the production of a resin having a notched Izod of greater than 0.26 J/cm comprising the reaction product of a rubbery polymer selected from butadiene/acrylonitrile, butadiene/styrene, polybutadiene and ethylene-propylene diene rubber with one or more ethylenically-unsaturated monomers selected from acrylonitrile, acrylic acid and methyl acrylate characterised in that it comprises:

(a) introducing a mixture of the rubbery polymer and one or more of said ethylenically-unsaturated monomers into a feed section of a screw extruder;

(b) polymerizing the monomer(s) with the rubbery polymer in one or more additional reaction sections of the extruder, each section containing means to remove the heat of reaction to control the temperature therein; and

(c) extruding the co-polymer formed at its melt temperature through a die head to produce the resin.

2. A process as claimed in claim 1, wherein the rubbery polymer is butadiene/acrylonitrile.

3. A process as claimed in claim 1 or claim 2, wherein the ethylenically-unsaturated monomer(s) is/are acrylonitrile and/or methyl acrylate.

4. A process as claimed in any of claims 1 to 3, wherein the extruder contains a de-watering section between the reaction section and the die head.

5. A process as claimed in any of claims 1 to 4, wherein the extruder contains a de-gassing section between the reaction section and the die head.

6. A process as claimed in any of claims 1 to 5, wherein the extruder is a twin-screw extruder.

7. A process as claimed in any of claims 1 to 6, wherein the ethylenically-unsaturated monomer(s) is/are fed to the extruder in the liquid state.

**Revendications**

1. Procédé pour la production d'une résine ayant une résistance au choc sur éprouvette entaillée de plus de 0,26 J/cm comprenant le produit de réaction d'un polymère caoutchouteux choisi parmi le butadiène/acrylonitrile, le butadiène/styrène, le polybutadiène et un caoutchouc diène éthylène-propylène avec un ou plusieurs monomères à insaturation éthylénique choisis parmi l'acrylonitrile, l'acide acrylique et l'acrylate de méthyle caractérisé par le fait qu'il comprend:

a) l'introduction d'un mélange du polymère caoutchouteux et d'un ou plusieurs desdits monomères à insaturation éthylénique dans une section d'alimentation d'une extrudeuse à vis;

b) la polymérisation du (ou des) monomère(s) avec le polymère caoutchouteux dans une ou plusieurs sections supplémentaires de réaction de l'extrudeuse, chaque section contenant un moyen pour retirer la chaleur de la réaction afin d'y contrôler la température; et

c) l'extrusion du copolymère formé à sa température de fusion à travers une tête de filière pour produire la résine.

2. Procédé selon la revendication 1, caractérisé par le fait que le polymère caoutchouteux est le butadiène/acrylonitrile.

3. Procédé selon l'une des revendications 1 et 2, caractérisé par le fait que le (ou les) monomère(s) à insaturation éthylénique est (ou sont) l'acrylonitrile et/ou l'acrylate de méthyle.

4. Procédé selon l'une des revendications 1 à 3, caractérisé par le fait que l'extrudeuse contient une section d'assèchement entre la section de réaction et la tête de filière.

5. Procédé selon l'une des revendications 1 à 4, caractérisé par le fait que l'extrudeuse contient une section de dégazage entre la section de réaction et la tête de filière.

6. Procédé selon l'une des revendications 1 à 5, caractérisé par le fait que l'extrudeuse est une extrudeuse à vis double.

7. Procédé selon l'une des revendications 1 à 6, caractérisé par le fait que le (ou les) monomère(s) à insaturation éthylénique est (ou sont) amené(s) à l'extrudeuse à l'état liquide.

## Patentansprüche

1. Verfahren zur Herstellung eines Harzes mit einer Izod-Kerbschalgfestigkeit von größer als 0,26 J/cm, das das Reaktionsprodukt aus einem gummiförmigen Butadien-Acrylnitril-, Butadien-Styrol-, Butadien- oder Ethylen-Propylendien-Polymerisat mit einem oder mehreren ethylenisch ungesättigten Monomer aus der Gruppe Acrylnitril, Acrylsäure, Methylacrylat enthält, dadurch gekennzeichnet, daß es die folgenden Schritte umfaßt:

(a) ein Gemisch des gummiförmigen Polymerisats und eines oder mehrerer der erwähnten ethylenisch ungesättigten Monomerverbindungen werden in den Zuführabschnitt eines Schraubenextruders eingeführt,

(b) daß die Monomerprodukte mit dem gummiförmigen Polymerisat in einem oder mehreren zusätzlichen Reaktionsabschnitten des Extruders polymerisiert werden, wobei jeder Abschnitt Mittel enthält, um die Reaktionswärme zur Kontrolle der Temperatur am Ort enthält und

(c) das gebildete Copolymerisat bei seiner Schmelztemperatur durch den Formkopf extrudiert wird, um so das Kunstharzprodukt zu bilden.

2. Verfahren gemäß Anspruch 1, dadurch gekennzeichnet, daß das gummiförmige Polymerisat ein Butadien-Acryl-nitril-Produkt ist.

3. Verfahren gemäß Ansprüchen 1 oder 2, dadurch gekennzeichnet, daß das ethylenisch ungesättigte Monomer-Produkt bzw. die ethylenisch-ungesättigten Monomer-produkte Acrylnitril und/oder Methylacrylat ist bzw. sind.

4. Verfahren gemäß irgendeinem der Ansprüche 1 bis 3, dadurch gekennzeichnet, daß der Extruder einen Entwässerungsabschnitt zwischen dem Reaktionsabschnitt und dem Formkopf aufweist.

5. Verfahren gemäß irgendeinem der Ansprüche 1 bis 4, dadurch gekennzeichnet, daß der Extruder einen Entgasungsabschnitt zwischen dem Reaktionsabschnitt und dem Formkopf aufweist.

6. Verfahren gemäß irgendeinem der Ansprüche 1 bis 5, dadurch gekennzeichnet, daß der Extruder ein Doppelschraubenextruder ist.

7. Verfahren gemäß irgendeinem der Ansprüche 1 bis 6, dadurch gekennzeichnet, daß das bzw. die ethylenisch ungesättigten Monomer-Produkte dem Extruder in flüssigem Zustand zugeführt werden.